# EUROPÄISCHE PATENTANMELDUNG

(11) **EP 0 857 003 A2**
(43) Veröffentlichungstag der Anmeldung: **05.08.1998**
(21) Anmeldenummer: 98101830.2
(22) Anmeldetag: 03.02.1998
(51) Int. Cl.: H04Q 11/04

(54) **Schaltungsanordnung zum Ersatzschalten von Übertragungseinrichtungen in Ringarchitekturen zur bidirektionalen Übertragung von ATM-Zellen**

(30) Priorität: 03.02.1997 DE 19703993
(71) Anmelder: SIEMENS AKTIENGESELLSCHAFT, 80333 München (DE)
(72) Erfinder: Klink, Joachim, 81369 München (DE)

(57) **Zusammenfassung**

Die Ersatzschaltung von ATM-Zellen wird beim Stand der Technik unter der Verwendung von linearen Strukturen effizient gesteuert. Um diese Strukturen auch auf ringförmige Architekturen übertragen zu können, wird erfindungsgemäß aus linearen Strukturen eine ringförmige Struktur ausgebildet, indem in den Übertragungsabschnitt einer linearen Struktur weitere lineare Strukturen eingebunden werden, und die Vermittlungseinrichtungen der ursprünglichen linearen Struktur zusammengeführt werden.

## Beschreibung

Schaltungsanordnung zum Ersatzschalten von Übertragungseinrichtungen in Ringarchitekturen zur bidirektionalen Übertragung von ATM-Zellen.

Die Erfindung betrifft eine Schaltungsanordnung gemäß dem Oberbegriff des Patentanspruch 1.

Eine derartige Schaltungsanordnung ist bereits aus der deutschen Patentanmeldung DE 19646016.6 bekannt.

Bei dieser bekannten Schaltungsanordnung sind Übertragungseinrichtungen zur bidirektionalen Übertragung von ATM-Zellen vorgesehen, bei der zwei als Endstellen fungierende Vermittlungseinrichtungen über eine Betriebsstrecke (Working Entity) und eine Ersatzstrecke (Protection Entity) miteinander verbunden sind. Die beiden Endstellen enthalten jeweils eine Überwachungsvorrichtung zur Feststellung von Übertragungsstörungen. Eine durch die Überwachungsvorrichtung steuerbare Schaltvorrichtung verbindet die empfangende Endstelle in einem ersten Schaltzustand mit der Betriebsstrecke und in einem zweiten Schaltzustand mit der Ersatzstrecke. Zwischen den Steuervorrichtungen der beiden Endstellen werden Steuerinformationen ausgetauscht. Die Schaltvorrichtung wird jeweils durch die örtliche Überwachungsvorrichtung in Abhängigkeit von örtlichen und in den von der Gegenstelle empfangenen Steuerinformationen enthaltenen Steuerkriterien gesteuert.

Nachteilig hieran ist, daß bei dieser bekannten Schaltungsanordnung lediglich das Ersatzschalten von Übertragungseinrichtungen zwischen zwei Endstellen angesprochen ist. Da insbesondere im Teilnehmeranschlußnetz Ringarchitekturen Verwendung finden, kann dieses Verfahren nicht verwendet werden.

Der Erfindung liegt die Aufgabe zugrunde, eine Schaltungsanordnung der eingangs genannten Art derart weiterzubilden, daß Informationen, die nach einem asynchronen Transfermodus übertragen werden, mit großer Sicherheit über eine Mehrzahl von Netzknoten übertragen werden können.

Die Erfindung wird ausgehend von den im Oberbegriff des Patentanspruchs 1 angegebenen Merkmale durch dessen kennzeichnende Merkmale gelöst.

Vorteilhaft an der Erfindung ist insbesondere, daß eine Mehrzahl von, aus Vermittlungseinrichtungen gebildeten linearen Übertragungsabschnitten zu einem Ringsystem zusammengefügt werden. Ein Übertragungsabschnitt wird dabei von einer Betriebsstrecke und/oder einer Ersatzstrecke gebildet. Damit ist der Vorteil verbunden, daß Verbindungen im Störungsfall der Betriebsstrecke in derart weitergebildeten Ringsystemen in effizienter Weise aufrechterhalten werden können.

Vorteilhafte Weiterbildungen der Erfindung sind in den Unteransprüchen angegeben.

Die Erfindung wird im folgenden anhand eines Ausführungsbeispiels näher erläutert.

Es zeigen:
- Figur 1: Eine Konfiguration zur bidirektionalen Übertragung von ATM-Zellen in einer linearen 1+1-Struktur,
- Figur 2: Eine Konfiguration zur bidirektionalen Übertragung von ATM-Zellen in einer linearen 1:1-Struktur,
- Figur 3: die erfindungsgemäße Schaltungsanordnung,

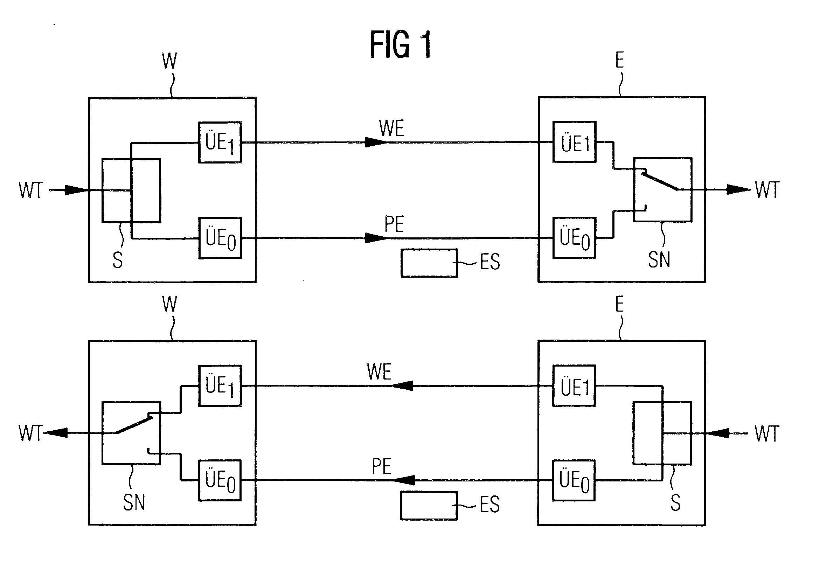

Gemäß Fig. 1 sind zwei Knoten eines ATM-Netzes aufgezeigt, welche jeweils als Vermittlungseinrichtung W, E ausgebildet sind. Die ATM-Zellen werden nach einem asynchronen Transfermodus übertragen und weisen jeweils einen Kopfteil sowie einen Informationsteil auf. Der Kopfteil dient der Aufnahme von Verbindungsinformation während der Informationsteil der Aufnahme von Nutzinformation dienlich ist. Die im Kopfteil enthaltene Verbindungsinformation ist als logische Information ausgebildet und wird in der Regel als virtuelle Pfadnummer VPI bzw. virtuelle Kanalnummer VCI ausgebildet. Dabei sind eine Mehrzahl dieser virtuellen Kanalnummern VCI jeweils zu einer virtuellen Pfadnummer VPI zusammengefaßt.

In vorliegendem Ausführungsbeispiel wird davon ausgegangen, daß es sich bei diesen Vermittlungseinrichtungen um Cross Connect Vermittlungseinrichtungen handelt. Die Verwendung derart ausgebildeter Vermittlungseinrichtungen bedeutet jedoch keine Einschränkung der Erfindung, andere Vermittlungseinrichtungen sind ebenso verwendbar. In Fig. 1 ist die Hin - und Rückübertragung von einer Verbindung WT zugehörigen ATM-Zellen zwischen der Vermittlungseinrichtung W und Vermittlungseinrichtung E aufgezeigt. Dabei handelt es sich um eine lineare 1+1 Struktur.

Die Vermittlungseinrichtungen W, E sind über eine Betriebsstrecke WE (WORKING ENTITY) sowie über eine Ersatzstrecke PE (PROTECTION ENTITY) miteinander verbunden. Weiterhin sind in den jeweils sendenden Vermittlungseinrichtungen Brückeneinrichtungen S (BRIDGE) aufgezeigt, über die die ankommenden ATM-Zellen aufgenommen und über die zugehörigen Betriebsstrecke WE zur jeweils empfangenden Vermittlungseinrichtung E hin übertragen werden.

Weiterhin sind Fig. 1 Selektionseinrichtungen SN entnehmbar, die jeweils in der empfangenden Vermittlungseinrichtung angeordnet sind. Deren Aufgabe besteht darin, die über die Betriebsstrecken WE übertragenen ATM-Zellen dem Ausgang der jeweils empfangenden Vermittlungseinrichtung zuzuführen. Gemäß vorliegendem Ausführungsbeispiel sind die Selektionseinrichtungen SN als Schaltvorrichtung ausgebildet.

Weiterhin sind in beiden Vermittlungseinrichtungen W, E Überwachungsvorrichtungen ÜE₀ , ÜE₁ (PROTECTION DOMAIN SINK, PROTECTION DOMAIN SOURCE) aufgezeigt, die den Zustand bzw. die Qualität der über die Betriebstrecke WE sowie die Ersatzstrecke PE übertragenen ATM-Zellen überwachen. Mit Hilfe dieser Überwachungsvorrichtungen kann dann ermittelt werden, ob die Übertragung der ATM-Zellen korrekt erfolgt ist oder nicht. Insbesondere kann hier ein Totalausfall (SIGNAL FAIL FOR WORKING ENTITY) einer Betriebsstrecke WE ermittelt werden. Ebenso sind aber auch unter Verwendung bekannter Verfahren Verschlechterungen in der Übertragungsqualität (SIGNAL DEGRADE) ermittelbar.

Die Überwachungsvorrichtungen ÜE₀ ,ÜE₁ schließen die Betriebsstrecken WE auf beiden Seiten ab. Weitere Überwachungsvorrichtungen ÜE₀ sind an beiden Enden der Ersatzstrecke PE angeordnet. Diese soll im Fehlerfall als Übertragungsstrecke für die außer Betrieb genommene Betriebsstrecke WE dienen. Weiterhin werden hierüber Ersatzschalteprotokolle ES übertragen, die in vorteilhafter Weise einphasig ausgebildet sind. Dies bedeutet, daß das Protokoll beim Auftreten eines Störungsfalles lediglich einmal zwischen den beiden Vermittlungseinrichtungen ausgetauscht wird. Der Intaktheit der Ersatzstrecke kommt oberste Priorität zu.

In jeder der Vermittlungseinrichtungen W, E sind ferner nicht näher aufgezeigte, zentrale Steuereinrichtungen angeordnet. Diese beinhalten jeweils lokale und globale Prioritätstabellen. In ersteren wird Zustand und Priorität der betreffenden lokalen Vermittlungseinrichtung abgespeichert, während in letzteren Zustand und Priorität der lokalen aber auch verbleibenden Vermittlungseinrichtung abgelegt ist. Durch die Einführung der Prioritäten wird erreicht, daß beim gleichzeitigen Auftreten mehrerer Ersatzschalteanforderungen festgelegt ist, welche Ersatzschalteanforderung bevorzugt zu behandeln ist. So besteht beispielsweise eine hochpriore Anforderung von einem Anwender. Da dieser Ersatzschalteanforderung eine hohe Priorität zugewiesen ist, wird sie somit bevorzugt gesteuert. Eine von der Betriebsstrecke gesteuerte Ersatzschalteanforderung wird somit zurückgewiesen.

Die zentralen Steuereinrichtungen der Vermittlungseinrichtungen W, E tauschen Informationen in einem Ersatzschalteprotokoll ES aus. Dieses Protokoll wird über die Ersatzstrecke PE übertragen und von der zugeordneten Überwachungseinrichtung ÜE₀ der jeweils empfangenden Vermittlungseinrichtung entnommen, und der betreffenden zentralen Steuereinrichtung zugeführt. Weiterhin wird in der zentralen Steuervorrichtung dafür Sorge getragen, daß im Fehlerfall die Schaltvorrichtungen SN in entsprechender Weise gesteuert werden.

Im Protokoll ES sind Informationen bezüglich der generierten Ersatzschalteanforderung abgelegt. Das Protokoll wird jeweils bei Generierung der Ersatzschalteanforderung zwischen den beiden Vermittlungseinrichtungen ausgetauscht. In einer speziellen Ausgestaltung der Erfindung wird vorgesehen, das Protokoll ES zyklisch zwischen beiden Vermittlungseinrichtungen zu übertragen.

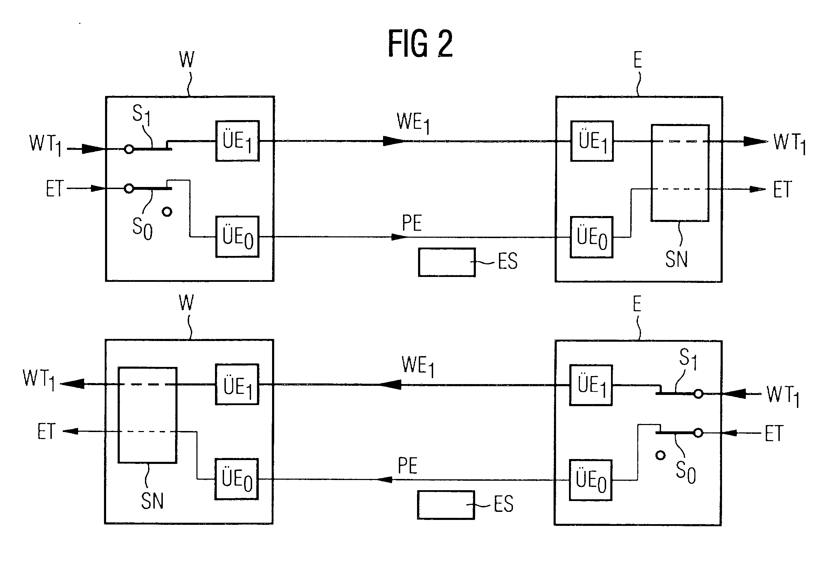

In Fig. 2 ist eine weitere lineare Struktur aufgezeigt, mit der ATM-Zellen ersatzgeschaltet werden können. Hierbei handelt es sich um eine 1:1 Struktur. Der Unterschied zu der in Fig. 1 aufgezeigten 1+1 Struktur besteht darin, daß die dort aufgezeigten Brückeneinrichtungen S als Schaltvorrichtungen S₀, S₁ ausgebildet sind. Weiterhin ist die Selektionseinrichtung SN gemäß Fig. 1 hier als ATM-Koppelfeld ausgebildet. Die über die Ersatzstrecke PE geleiteten ATM-Zellen werden diesem Koppelfeld zugeführt. Hier wird nun die logische Pfadnummer VPI dem Zellenkopf entnommen, ausgewertet und durch das Koppelfeld durchgeschaltet. Das Ansteuern von Schalteinrichtungen entfällt somit in diesem Fall in der empfangenden Vermittlungseinrichtung. In den Vermittlungseinrichtungen W, E gemäß Fig. 2 sind ebenso - nicht aufgezeigte - zentrale Steuereinrichtungen mit lokalen und globalen Prioritätstabellen enthalten.

Die Ersatzstrecke PE kann während dieser Zeit ungenutzt bleiben. Gegebenenfalls können aber auch während dieser Zeit Sonderdaten (EXTRA TRAFFIC) der Vermittlungseinrichtung E zugeführt werden.

Das Protokoll ES ist hier in anderer Weise ausgebildet, als im ersten Fall. So sind hier zusätzlich zu den bereits im ersten Fall angesprochenen Informationen bezüglich der generierten Ersatzschalteanforderung weitere Informationen abgelegt.Dabei handelt es sich um Informationen bezüglich der momentanen Zustände der Schaltvorrichtungen S₀, S₁. Im Fehlerfall müssen die Schaltvorrichtungen S₀, S₁ in entsprechender Weise gesteuert werden. Das Protokoll wird jeweils bei Generierung der Ersatzschalteanforderung zwischen den beiden Vermittlungseinrichtungen ausgetauscht. In einer speziellen Ausgestaltung der Erfindung wird vorgesehen, das Protokoll ES zyklisch zwischen beiden Vermittlungseinrichtungen zu übertragen.

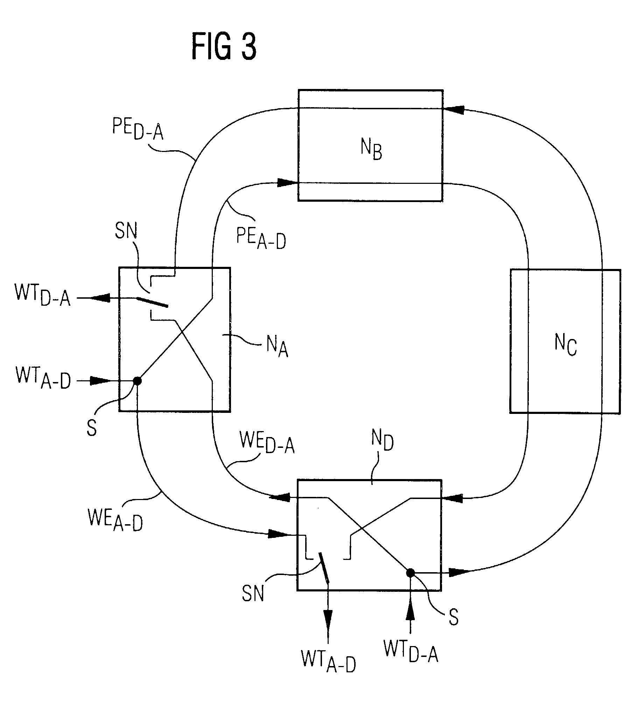

In Fig. 3 ist die erfindungsgemäße Schaltungsanordnung aufgezeigt. Die Vermittlungseinrichtungen sind dabei so geschaltet, daß sich ein geschlossener Ring ergibt. Gemäß vorliegendem Ausführungsbeispiel soll dabei dieser Ring aus linearen Verbindungsabschnitten aufgebaut sein, wie sie gemäß Fig. 1 oder Fig. 2 aufgezeigt sind. Das vorliegende Ausführungsbeispiel gemäß Fig. 3 wird mit der in Fig. 1 aufgezeigten linearen 1+1 Struktur beschrieben, ohne daß damit eine Bevorzugung dieser Struktur angedeutet werden soll.

In Fig. 3 sind Vermittlungseinrichtungen Nₐ, N_{b}, N_{c} sowie N_{d} aufgezeigt. Jeweils zwei Vermittlungseinrichtungen schließen dabei Übertragungsabschnitte ab. Am Beispiel der Vermittlungseinrichtungen Nₐ und N_{d} sind dies die Verbindungsabschnitte WE_{A-D_} sowie WE_{D-A}. Am Beispiel der Vermittlungseinrichtungen Nₐ sowie N_{b} oder N_{b}, N_{c} oder N_{c}, N_{d} sind dies die Verbindungsabschnitte PE_{A-D} sowie PE_{D-A}.

Gemäß Fig. 3 weist jede dieser, einen Ring bildenden Vermittlungseinrichtungen eine Brückeneinrichtung S sowie eine Selektionseinrichtung SN auf. Gemäß vorliegendem Ausführungsbeispiel sind die Vermittlungseinrichtungen derart geschaltet, daß zwischen den Vermittlungseinrichtungen N_{A} und N_{D} die jeweils aktiven Betriebsstrecken WE_{A-D_} sowie WE_{D-A} angeordnet sind. Über diese Betriebsstrecken werden dann die über die Verbindung WT_{A-D_} sowie WT_{D-A} ankommenden ATM-Zellen geleitet. Die Ersatzstrecken werden hingegen von der Vermittlungseinrichtung N_{A} über weitere Vermittlungseinrichtungen N_{B}, N_{C} zur Vermittlungseinrichtung N_{D} geleitet. Dort verlassen die ATM-Zellen den Ring, um weiteren Einrichtungen zugeführt zu werden.

Weiterhin ist der von den Vermittlungseinrichtungen gebildete Ring bidirektional ausgeprägt. Die Rückrichtung der Verbindung WT_{A-D} wird durch die Verbindung WT_{D-A} gebildet. Zum besseren Verständniss sei angemerkt, daß beide Verbindungen getrennt behandelt werden, obwohl es sich um eine bidirektionale Verbindung handelt. Wesentlich ist, daß der jeweiligen Betriebsstrecke jeweils genau eine Ersatzstrecke zugeordnet ist. Gemäß vorliegendem Ausführungsbeispiel ist der Betriebsstrecke WE_{A-D_} die Ersatzstrecke PE_{A-D} und der als Rückrichtung fungierenden Betriebsstrecke WE_{D-A} die Ersatzstrecke PE_{D-A} zugeordnet.

Weiterhin sind in den einzelnen Vermittlungseinrichtungen - in Fig. 3 nicht aufgezeigte - Überwachungseinrichtungen angeordnet. Diese schließen jeweils die Betriebstrecken WE_{A-D_} und WE_{D-A} sowie die Ersatzstrecken PE_{A-D} sowie PE_{D-A} ab. Erfindungsgemäß sollen nun die virtuellen Pfadnummern VPI zu einer virtuellen Pfadgruppennummer VPG zusammengefaßt werden. Dies hat den Vorteil, daß das Ersatzschalteprotokoll im Störungsfall einer Betriebstrecke lediglich einmal zu übertragen ist. Dabei wird davon ausgegangen, daß andernfalls pro virtueller Pfadnummer VPI ein Ersatzschalteprotokoll zu übertragen wäre. Dies würde jedoch aufgrund der Vielzahl der Verbindungen zu einer dynamischen Belastung des Ringes führen. Da aber eine Mehrzahl von Verbindungen mit derselben virtuellen Pfadnummer VPI denselben Übertragungsabschnitt benutzen und eine mögliche Störung in der Regel den gesammten Übertragungsabschnitt betrifft, ist eine logische Bündelung der virtuellen Pfadnummern VPI zu einer logischen Bündelnummer vorteilhaft.

Im folgenden soll davon ausgegangen werden, daß die Verbindung WT_{A-D} es erfordert, daß die zugehörigen ATM-Zellen über die Vermittlungseinrichtung N_{A} dem Ring zugeführt werden und über die Vermittlungseinrichtung N_{D} denselben wieder verlassen. In diesem Fall werden somit die der Verbindung WT_{A-D} zugehörigen ATM-Zellen der in der Vermittlungseinrichtung N_{A} angeordneten Brückeneinrichtung S zugeführt. Da diese fest eingestellt ist, werden die ATM-Zellen zur Vermittlungseinrichtung N_{D} sowohl über die Betriebsstrecke WE_{A-D} als auch über die Ersatzstrecke PE_{A-D} zugeleitet und verlassen dort den Ring.

Im störungsfreien Fall, d.h. wenn keine Betriebsstörung auf der aktiven Betriebsstrecke vorliegt, werden die ATM-Zellen von der Vermittlungseinrichtung N_{A} unmittelbar zur Vermittlungseinrichtung N_{D} geleitet.Tritt hier jedoch eine Betriebsstörung auf, so wird dies von der in der empfangenden Vermittlungseinrichtung angeordneten Überwachungseinrichtung ermittelt. Dies soll in vorliegendem Fall die Vermittlungseinrichtung N_{D} sein. Daraufhin wird von dieser unverzüglich das Ersatzschalteprotokoll über die zugeordnete Ersatzstrecke PE_{A-D} zur sendenden Vermittlungseinrichtung, also der Vermittlungseinrichtung N_{A} zugeführt. Zeitgleich hierzu wird die Selektionseinrichtung SN in den Betriebszustand gesteuert, der ATM-Zellen über die Ersatzstrecke PE_{A-D} entgegennimmt.

Die Überwachungseinrichtungen überprüfen ebenfalls den Betriebszustand auf den Ersatzstrecken. Werden beispielsweise ATM-Zellen über die Betriebsstrecke WE_{A-D} übertragen und wird nun von der empfangenden Vermittlungseinrichtung, also der Vermittlungseinrichtung N_{D} ein Störungsfall auf der zugeordneten Ersatzstrecke PE_{A-D} ermittelt, so wird über im Ersatzschalteprotokoll abgelegten Informationen dies der sendenden Vermittlungseinrichtung N_{A} mitgeteilt. Dadurch wird verhindert, daß im Falle einer zusätzlichen Störung auf der aktiven Betriebsstrecke WE_{A-D} ein Umschalten auf eine störungsbehaftete Ersatzstrecke PE_{A-D} erfolgt.

Erfindungsgemäß wird das Ersatzschalteprotokoll lediglich beim Auftreten von Störungen ausgetauscht,ein zyklischer Austausch kann aber ebenfalls gesteuert werden. Ebenso kann der Austausch des Ersatzschalteprotokolls verbindungsindividuell pro virtueller Pfadnummer VPI oder gegebenenfalls pro virtueller Kanalnummer VCI erfolgen. Dabei muß jedoch berücksichtigt werden, daß in diesen Fällen eine dynamische Zusatzbelastung des Ringes erfolgt. Vorteilhaft hierbei ist jedoch, daß verbindungsindividuelle Störungen bezüglich der virtuellen Kanalnummer VCI bzw. der virtuellen Pfadnummer VPI mit einer derartigen Vorgehensweise behandelt werden können. Mit der bevorzugten Ausführungsform der virtuellen Pfadgruppe kann lediglich der - am häufigsten auftretende Strörungsfall auf der Trasse - behandelt werden.

Abschließend sei angemerkt, daß zwar der Ring bei vorliegendem Ausführungsbeispiel aus linearen 1+1 Strukturen aufgebaut ist. Die Verwendung einer 1:1 Struktur gemäß Fig. 2 bringt aber weitere Vorteile. Zwar ist das Ersatzschalteprotokoll hier komlexer aufgebaut, allerdings können hier Sonderdaten über die Ersatzstrecke während der störungsfreien Zeit auf der Betriebsstrecke übertragen werden. Als Sonderdaten können dabei Steuerdaten allgemeiner Art verwendet werden. Erfindungsgemäß können die Sonderdaten auch als spezielle Verkehrsdaten ausgebildet sein. Beispielsweise kommen hierbei ABR (Available Bit Rate) oder UBR (Unspecified Bit Rate) Verkehrsdaten in Betracht,da die diese Daten benutzenden Dienste kostengünstig sind.

## Patentansprüche

1. Schaltungsanordnung zum Ersatzschalten von Übertragungseinrichtungen in Ringarchitekturen zur bidirektionalen Übertragung von ATM-Zellen, mit wenigstens zwei Vermittlungseinrichtungen (N_{A}, N_{D}), die jeweils einen aus Betriebsstrecken (WE_{A-D}, WE_{D-A} ) und/oder Ersatzstrecken (PE_{A-D}, PE_{D-A}) gebildeten Übertragungsabschnitt abschließen, und zwischen denen Informationen in ATM-Zellen über diesen Übertragungsabschnitt zugeführt wird, wobei im Falle einer Störung auf dem betreffenden Übertragungsabschnitt die hierüber bislang übertragen ATM-Zellen nach Maßgabe von Prioritätskriterien und logischen Verbindungsinformationen gegebenenfalls auf die Ersatzstrecke umgeleitet werden,
**dadurch gekennzeichnet**,
daß in den Übertragungsabschnitt weitere Vermittlungseinrichtungen (N_{B}, N_{C}) eingebunden werden, und die wenigstens zwei Vermittlungseinrichtungen (N_{A}, N_{D}) zusammengeführt werden.

2. Schaltungsanordnung nach Anspruch 1,
**dadurch gekennzeichnet**,
daß der Betriebsstrecke (WE_{A-D}, WE_{D-A}) eine Ersatzstrecke (PE_{A-D}, PE_{D-A}) zugeordnet ist, und beide Strecken jeweils eine Priorität zugewiesen ist.

3. Schaltungsanordnung nach Anspruch 1 oder 2,
**dadurch gekennzeichnet**,
daß im Ersatzschaltefall eine Ersatzschalteanforderung generiert wird, der weitere Prioritäten zugewiesen werden.

4. Schaltungsanordnung nach Anspruch 1,
**dadurch gekennzeichnet**,
daß die logische Verbindungsinformation die Nummer eines virtuellen Kanals (VCI), und/oder die Nummer eines virtuellen Pfades (VPI) und/oder die Nummer einer virtuellen Pfadgruppe (VPG) ist, die aus einer Mehrzahl von virtuellen Pfaden (VPI) gebildet wird.

5. Schaltungsanordnung nach Anspruch 1 bis 4,
**dadurch gekennzeichnet**,
daß lokale und globale Prioritätstabellen vorgesehen werden, in der die Rangfolge der Prioritäten festgelegt wird.

6. Schaltungsanordnung nach einem der vorstehenden Ansprüche,
**dadurch gekennzeichnet**,
daß bei Eintreffen einer Ersatzschalteanforderung in der empfangenden Vermittlungseinrichtung ein Ersatzschalteprotokoll generiert wird, das lediglich einmal über die Ersatzstrecke (PE) der sendenden Vermittlungseinrichtung zugeführt wird.

7. Schaltungsanordnung nach einem der vorstehenden Ansprüche,
**dadurch gekennzeichnet**,
daß Totalaufall und Verschlechterung einer Betriebsstrecke in der Überwachungseinrichtung der empfangenden Vermittlungseinrichtung ermittelt werden.

8. Schaltungsanordnung nach einem der vorstehenden Ansprüche,
**dadurch gekennzeichnet**,
daß die Vermittlungseinrichtungen als Crossconnect- Schalteinrichtungen ausgebildet sind.

9. Schaltungsanordnung nach einem der vorstehenden Ansprüche,
**dadurch gekennzeichnet**,
daß die Ersatzschaltung gegebenenfalls durch Ansteuern einer in der sendenden Vermittlungseinrichtung enthaltenden Schaltvorrichtung (S₀, S₁) sowie unter Verwendung einer in der empfangenden Vermittlungseinrichtung angeordneten Selektionseinrichtung (SN) erfolgt.

10. Schaltungsanordnung nach einem der vorstehenden Ansprüche,
**dadurch gekennzeichnet**,
daß über die Ersatzstrecke (PE) in betriebsstörungsfreien Zeiten Sonderdaten übertragen werden.

11. Schaltungsanordnung nach vorstehenden Ansprüche,
**dadurch gekennzeichnet**,
daß Sonderdaten als ABR oder UBR Verkehrsdaten ausgebildet sind.

12. Schaltungsanordnung nach einem der vorstehenden Ansprüche,
**dadurch gekennzeichnet**,
daß die Selektionseinrichtung (SN) als ATM-Koppelfeld und/ oder als einfaches Schaltelement ausgebildet ist.

13. Schaltungsanordnung nach einem der Ansprüche 1 bis 8,
**dadurch gekennzeichnet**,
daß die in der sendenden Vermittlungseinrichtung angeordnete Schaltvorrichtung (S) fest einstellbar ist.

14. Schaltungsanordnung nach einem der vorstehenden Ansprüche,
**dadurch gekennzeichnet**,
daß das Ersatzschalteprotokoll zyklisch zwischen der sendenden Vermittlungseinrichtung sowie der empfangenden Vermittlungseinrichtung ausgetauscht wird.
